# EUROPEAN PATENT APPLICATION

(11) **EP 0 642 052 A1**
(43) Date of publication of application: **08.03.1995**
(21) Application number: 94202305.2
(22) Date of filing: 12.08.1994
(51) Int. Cl.: G02F 1/29, G02B 6/12

(54) **Polymeric thermo-optical waveguide device**

(30) Priority: 24.08.1993 EP 93202481; 29.04.1994 EP 94201182
(71) Applicant: Akzo Nobel N.V., NL-6824 BM Arnhem (NL)
(72) Inventor: Bakker, Arjen Franciscus, NL-7522 ZA Enschede (NL); Horsthuis, Winfried Henri Gerard, NL-7533 VV Enschede (NL); Klein Koerkamp, Hermanus Marcellinus Maria, NL-7545 AT Enschede (NL)
(74) Representative: Schalkwijk, Pieter Cornelis

(57) **Abstract**

Disclosed is a polymeric thermo-optic device comprising a polymeric optical waveguide having a layered structure comprising a polymeric guiding layer (core layer) sandwiched between two cladding layers having a refractive index lower than that of the guiding layer. A heating element is placed against one of the cladding layers. According to the invention, this cladding layer has a lower refractive index than the other cladding layer.

## Description

The invention pertains to a polymeric thermo-optic device comprising a polymeric optical waveguide and a heating element, the polymeric waveguide having a layered structure comprising a polymeric guiding layer (core layer) sandwiched between two layers having a refractive index lower than that of the guiding layer (cladding layers).

Thermo-optic devices are known, e.g. from the description given by Diemeer et al. in Journal of Lightwave Technology, Vol.7, No.3 (1989), pp 449-453. Their working is generally based on the phenomenon of the optical waveguide material employed exhibiting a temperature dependent refractive index (polarization independent thermo-optic effect). Such devices have been realised, int.al., in inorganic materials such as ion-exchanged glass and titanium-doped lithium niobate. The use of all-polymeric waveguides for thermo-optic devices has also been disclosed, an advantage thereof described by Diemeer et al. being that a modest increase in temperature may result in a large index of refraction change. The device described by Diemeer is an all-polymeric planar switch. Switching is achieved by employing total internal reflection from a thermally induced index barrier. The device comprises a substrate (PMMA), a guiding layer (polyurethane varnish), and a buffer layer (PMMA), with the heating element being a silver stripe heater deposited by evaporation upon the buffer layer through a mechanical mask. A typical switching speed disclosed is 12 ms for changing from the deflected state (on state) to the transmitted state (off state), and 60 ms for changing from transmission to deflection.

A thermo-optic switching device has also been disclosed by Möhlmann et al. in SPIE Vol. 1560 Nonlinear Optical Properties of Organic Materials IV (1991) pp 426-433. Use is made of a polymer in which a waveguide channel can be created through irradiation. The disclosed device is a polarisation/wavelength insensitive polymeric switch comprising an asymmetric Y-junction. The switching properties are based on heat-induced refractive index modulations causing variations in the mode evolution in such asymmetric Y-junctions. The device comprises a glass substrate and a polymeric multilayer comprising an NLO polymer. The multi layer structure is not specifically shown. The disclosed switching time is of the order of milliseconds. The disclosure refers to devices that are attractive in those locations of the network where slower switches are permitted. Another thermo-optic device disclosed is a thermo-optically biassed electro-optic Mach Zehnder interferometer.

Light beam deflection caused by a local refractive index change in polymer optical waveguide films has been described by Yamada and Kurokawa in Japanese Journal of Applied Physics, Vol. 21 No. 12 (1982), pp 1746-1749. Disclosed is applying an RF electric voltage to a polymer waveguide film to raise the temperature by dielectric loss heating. The local refractive index change caused by this heating leads to an incident light beam being deflected in the film plane. A typical deflection speed disclosed is 150-200 ms.

In Electronic Letters, Vol. 24, No. 8 (1988), pp 457-458 an optical switch is disclosed in which optical fibres are coupled using a single-mode fused coupler having a silicone resin cladding material provided onto the coupling region. Switching is achieved by a thermally induced refractive index change of the silicone cladding. Typical switching times disclosed are 5 ms for reaching the on-state and 80 ms for reaching the off-state.

In US 4,753,505 a thermo-optic switch is described comprising a layered waveguide in which the material having a temperature dependent refractive index is a polymer or glass. The waveguide has a conventional structure of a core layer sandwiched in between two cladding layers having an index of refraction which is lower than that of the core layer.

### Background art further includes:

EP 306 956, from which it is known to employ the thermo-optic effect to correct wavelength shifts that occur in directional couplers due to fluctuations of structural parameters during the process of manufacturing. To this end, a layered waveguide structure is provided in which core waveguides and a cladding are successively stacked on a low refractive index layer, the cladding being provided with a thin film heater.
L'Onde Électrique, Vol. 71, No. 4, July 1991, p87, from which a hybrid layered waveguide structure is known. The waveguide is used for electro-optic modulation, and comprises a polymeric core (doped PMMA) which on three sides is surrounded by a polymeric cladding (neat PMMA), and in which the lower cladding layer is silicon on glass.
EP 442 779, from which a conventional, symmetric layered waveguide structure is known in which the core layer is provided with a waveguide channel by way of a ribbon having a low refractive index.
EP 281 800 from which a layered waveguide structure is known, the consecutive layers being a substrate, a low refractive index layer, and a cladding layer. In the cladding layer a core (channel) is provided having a higher refractive index than the surrounding material.

While the disclosed polymeric thermo-optic devices sufficiently establish that thermo-optic effects can be employed to achieve, e.g., switching, the known devices are too slow for practical usage. Notably, if commercially viable thermo-optic devices are to be attained, there is a need to further decrease the switching power and the response time.

To this end the invention consists in that in a polymeric thermo-optic device of the type identified in the opening paragraph the cladding layer adjacent to the heating element has a lower refractive index than the other cladding layer.

A device according to the invention may be built up, e.g., as follows. Underneath the polymeric waveguide is a support, e.g. a glass or silicon substrate. On the substrate the following successive layers can be identified: a lower cladding layer, which may be glass, but preferably is polymeric, a polymeric core layer (guiding layer), and an upper cladding layer, which also is preferably polymeric but can be made up of other materials, e.g., glass. The polymeric core layer is the actual waveguiding layer, the two cladding layers having an index of refraction which is lower than that of the core layer. On top of the upper cladding is placed the heating element. The structure in accordance with the invention is now such that the upper cladding has a lower refractive index than the lower cladding. By virtue of the increased RI contrast between the core and the upper cladding, the upper cladding can be made thinner than usual, and the overall thickness of the layered waveguide can be even further reduced. This has several advantages. E.g., the response time of the thermo-optic device to a temperature rise induced by the heating element is shorter than with a symmetric thermo-optic device. For, by virtue of the shorter distance between the heating element and the core layer the latter will experience a higher temperature, and the desired refractive index change will occur at a faster rate. Also, the reduced heat capacity of the thinner overall structure leads to a faster cooling and heating rate, hence the invention enables a faster change of the core's refractive index. A further advantage associated with the shorter distance between heating element and core is that a better control is achieved of the position of the heated zone (dissipation of heat to zones that should not be heated can be substantially decreased, which means a direct improvement of the function of the thermo-optic device).

In a particularly preferred embodiment of an all-polymeric waveguide structure, the lower cladding layer is made up of two sublayers, the lower of which (i.e., the one adjacent to the substrate) is a thin layer (e.g. about 3 µm) having a lower index of refraction than the other sublayer (i.e., the one adjacent to the core layer). This additional low index layer has the advantage of preventing the propagated light from radiating into the substrate. Thus, the actual waveguiding structure is "optically isolated" from the substrate. This is particularly important if the substrate is one chosen for its heat-dissipating properties rather than for its refractive index. Silicon, e.g., is an excellent heat sink, but has a higher index of refraction than the layers making up the waveguide. Radiation of propagated light into the silicon substrate cannot be prevented. This may lead to loss of light, but in particular it makes it difficult to determine exactly which portion of the light actually propagates through the layered waveguide. The additional low index layer provides the certainty that all the light will propagate through the waveguide. This considerably facilitates designing the layered waveguide. In order to not affect the thermal profile, it is preferred that in the presence of the additional low index layer the total thickness of the layered waveguide not be affected. By virtue of polymeric materials being chosen rather than inorganic materials, this can be realized in a simple manner.

Devices according to the invention can be used with advantage in optical communication networks of various kinds. Generally, the thermo-optic components either will be directly combined with optical components such as light sources (laser diodes) or detectors, or they will be coupled to input and output optical fibres, usually glass fibres. Of particular importance is achieving efficient coupling with the known standard single mode fibres (SSMF). In order to achieve such efficient coupling, various modifications (e.g., tapering) can be made to the fibres. The devices according to the invention, however, allow refraining from such modifications, which makes for a much reduced complexity of the process, a lower cost and a higher yield, while keeping the coupling losses low. This can be achieved by tailoring the layered structure of the device, more particularly the layer widths and the refractive index contrasts, so as to match the field profile of optical waves propagating through the device to that of the optical waves propagating through the fibres.

It should be noted that SSMFs have a symmetric structure. As a rule, coupling to a waveguide having an asymmetric core-cladding structure will lead to higher coupling losses than coupling to a symmetric waveguide which is optimized for fiber-chip coupling. However, the refractive index asymmetry makes it possible to reduce the total thickness of the device (which, as outlined above, is advantageous for thermo-optic functioning) without seriously affecting the mode match required for efficient coupling to optical fibres. Additional coupling losses, while not completely avoidable, are negligible in the devices of the present invention.

Although the refractive indices of the cladding and core layers form an important aspect of the present invention, this is chiefly because the absolute values of the refractive indices determine the refractive index contrasts between the various layers of the waveguide. Coupling losses between the waveguide and the optical fibres connected therewith depend on the field profiles of the propagating optical waves, which are determined by the refractive index contrast and the layer widths. The Fresnel losses are almost directly related to the absolute refractive index values. When standard fibres are used, these losses are negligible when the effective index (N_{eff}) of the guided modes is below approximately 1.60. Neff, which is a term well-known in the art, depends on, int.al., the geometry of the waveguide and the refractive indices of core and cladding, and indicates the refractive index as experienced by a propagating wavefront.

The refractive index of the optical polymers used will generally be within the range of from 1.4 to 1.8, preferably of from 1.45 to 1.60.

The refractive index contrast between the two cladding layers may vary. The lower limit is mainly determined by whether the effect of the invention can be attained, i.e., by whether a substantial decrease is achieved in switching power needed, or in response time, or both. The upper limit is mainly determined by the point at which any further decrease by and large has no additional effect and/or coupling losses become too high. Said refractive index contrast will mostly be of the order of 0.005 to 0.05.

If having a low optical loss is more crucial than having a reduced switching power, it is preferred to provide a waveguide structure that is less asymmetric, i.e., in which the refractive index contrast between the two cladding layers is of the order of 0.005 to 0.01. In particular, this may be the case for a 1*2 switch, in which the power for only one switching unit is needed, and coupling losses at the input and output fibres make a large contribution in percentage terms to the efficacy of the switch. In the case of an n*m switch, n and m being integers ≧2, which comprises a cascade of 1*2 and/or 2*2 switches having a single input and output optical fibre, the coupling losses make a less signifcant contribution, and a reduced switching power is of more importance in view of the higher number of switching units to be operated. In such a case it is preferred to have a high refractive index contrast, i.e. of the order of 0.03 to 0.05, so as to allow the thinnest possible cladding layer adjacent to the heater. In most cases, however, it will be desired to have the optimal combination of low optical loss and reduced switching power. To this end, it is most preferred if the above refractive index contrast is within the range of from 0.01 to 0.03.

Optical polymers are known, and the person of ordinary skill in the art is able to choose polymers having the appropriate refractive indices, or to adapt the refractive indices of polymers by chemical modification, e.g., by introducing monomeric units that affect the refractive index. As all polymers exhibit a thermo-optic effect, basically any polymer having sufficient transparency for the wavelength used can be employed in the core of the waveguide component. Said transparency requirement also holds for the cladding. Particularly suitable optical polymers include polyacrylates, polycarbonates, polyimides, polyureas.

The design of the layered polymeric waveguide comprised in the devices according to the present invention generally depends on the exact function that the thermo-optic device has in the optical network. Whatever design is required, in the layered (slab) waveguide structure, in which a core layer is sandwiched between two layers having a lower index of refraction, it will usually be required to introduce a pattern of laterally defined waveguide channels, i.e., portions of the core layer that vertically and laterally are adjacent to material having a lower index of refraction. A waveguide can be provided with a pattern of waveguide channels in various manners. Methods to achieve this are known in the art. For example, it is possible to introduce such a pattern by removing portions of the slab waveguide, e.g., by means of wet-chemical or dry etching techniques, and to fill the gaps formed with a material having a lower index of refraction. Or, e.g., photosensitive material that can be developed after irradiation may be used. In the case of a negative photoresist the photosensitive material is resistent to the developer after irradiation, and the portions of the material that were not subjected to irradiation can be removed. It is preferred to use a positive photoresist, and to define the channels by means of an irradiation mask covering the waveguide portions that will form the channels. The irradiated material then is removed using developer, after which a material of lower refractive index is applied.

It is more strongly preferred, however, to use a core material that allows defining a waveguide pattern without material having to be removed. Materials of this nature exist, e.g., those that will undergo chemical or physical conversion into a material having a different refractive index when subjected to heat, light, or UV radiation. In the cases where this conversion results in an increase in the refractive index, the treated material will be employed as core material for the waveguide channels. This can be carried through by employing a mask in which the openings are identical with the desired waveguide pattern. In the case of the treatment leading to a decrease of the refractive index, the treated material is suitable as a cladding material. In that case a mask as mentioned above is used, i.e. one that covers the desired waveguide channels. A particular, and preferred, embodiment of this type of core material is formed by polymers that can be bleached, i.e., of which the refractive index is lowered by irradiation with visible light or UV, without the physical and mechanical properties being substantially affected. To this end it is preferred to provide the slab waveguide with a mask that covers the desired pattern of waveguide channels, and to lower the refractive index of the surrounding material by means of (usually blue) light or UV radiation. Bleachable polymers have been described in EP 358 476.

It is further preferred to employ NLO polymers in the core, in order to have the possibility of making combined thermo-optic/electro-optic devices.

Optically non-linear materials, also called non-linear optical (NLO) materials, are known. In such materials non-linear polarisation occurs under the influence of an external field of force (such as an electric field). Non-linear electric polarisation may give rise to several optically non-linear phenomena, such as frequency doubling, Pockels effect, and Kerr effect. Alternatively, NLO effects can be generated opto-optically or acousto-optically. In order to render polymeric NLO materials NLO-active (obtain the desired NLO effect macroscopically), the groups present in such a material, usually hyperpolarisable sidegroups, first have to be aligned (poled). Such alignment is commonly effected by exposing the polymeric material to electric (dc) voltage, the so-called poling field, with such heating as will render the polymeric chains sufficiently mobile for orientation. NLO polymers are described in, int. al., EP 350 112, EP 350 113, EP 358 476, EP 445 864, EP 378 185, and EP 359 648.

Making the polymeric optical waveguide of the invention will generally involve applying a solution of the polymer used as the lower cladding to a substrate, e.g. by means of spincoating, followed by evaporating the solvent. Subsequently, the core layer, and the upper cladding layer, can be applied in the same manner. On top of the upper cladding the heating element will be placed, e.g., by means of sputtering, chemical vapour deposition, or evaporation and standard lithographic techniques. For fixation and finishing a coating layer may be applied on top of the entire structure, so as to allow better handling of the device. Alternatively, instead of a coating layer a glue layer may be used for fixation, after which the total structure can be finished by placing an object glass on it.
When making all-polymeric layered waveguide structures, it is advantageous to apply the individual layers in the form of prepolymers that comprise functional end-groups (e.g. OH) and to include a cross-linker (e.g. a diisocyanate such as Desmodur-N) so that a cured polymeric network is formed that does not dissolve when the next layer is provided.

Suitable substrates are, int. al., silicon wafers or plastics laminates, such as those based on epoxy resin which may be reinforced or not. Suitable substrates are known to the skilled man. Preferred are substrates that, by virtue of a high thermal conductivity, can function as a heat-sink. This can considerably speed up the thermo-optic switching process. For, considering that switching to, say, the "on" state can be reached by heating the waveguide, reaching the "off" state then will require leaving the waveguide to cool. The preferred substrates in this respect are glass, metal, or ceramics, and particularly silicon.

It is also possible to employ thermosetting material for making the polymeric optical waveguide, or a portion thereof (e.g. one of the layers). If at least the lower cladding is made from a freestanding thermoset material, it is possible to refrain from using a separate substrate if so desired, as the lower cladding will perform this function.

The heating element will generally be made up of a thin film electric conductor, usually a thin metal film. Such a thermal energy generating live electric conductor can also be called "resistor wire" for short. Of course, suitable thermal energy generating conductors are not restricted to the wire form.

The thermal energy generating live electric conductor, the resistor wire, may be a heating element known in itself from the field of thin-film technology, such as Ni/Fe or Ni/Cr. Alternatively, it is possible to employ as electric conductor those materials which are known from the field of electro-optic switches as the ones from which electrodes are made. These include noble metals, such as gold, platinum, silver, palladium, or aluminium, as well as those materials known as transparent electrodes, e.g., indium tin oxide. Aluminium and gold are preferred.

If poled NLO polymers are employed in the present waveguides, using heating elements that can function as an electrode makes it possible to combine thermo-optic and electro-optic functions in a single device.

In the case of the functions of the electrode and the resistor wire being combined, a surge can be realised in actual practice by, say, employing a feed electrode of relatively large diameter (low current density) followed by a segment having a comparatively small diameter. A high current density will then be created in this narrow segment, so that heat is generated. Alternatively, it is possible to employ a material made up of two metals of different intrinsic resistance, and to vary either the thickness of the different metallisations or the composition of the material in such a way as to obtain the desired effect of a low current density, or a low intrinsic resistance upon supply, while a high current density or a comparatively high intrinsic resistance is displayed at the location where the thermo-optic effect is desired. By thus varying current densities it is possible to locally obtain a thermo-optic effect.
In the case of NLO polymers being employed, the heating element may be put to initial use during the alignment of the NLO polymers.

The invention is further illustrated with reference to the following unlimitative Examples and the accompanying drawings.

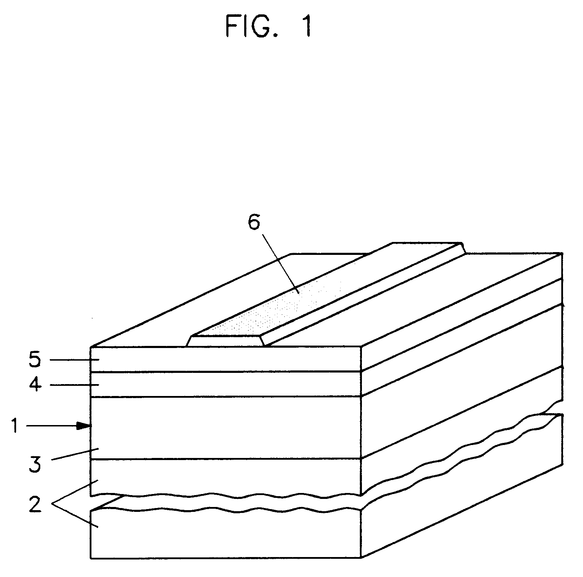

Figure 1 shows a layered polymeric waveguide (1) having an asymmetric structure. The layered waveguide comprises a substrate (2), a lower cladding layer (3), a guiding layer (4), and an upper cladding layer (5). On top of the upper cladding layer (5), is a heating element (6). The two cladding layers (3,5) have a lower refractive index than the guiding layer (4). Further, the upper cladding layer (5) has a lower refractive index than the lower cladding layer (3), and consequently can be thinner, as is shown.

### EXAMPLE 1

The relevant data of several waveguides are given. The waveguides are comprised of a layered structure in which, on a substrate (S), the following successive layers can be identified: lower cladding layer (L), core layer (C), upper cladding layer (U), and heating element (H), i.e., as follows (see also Figure 1): 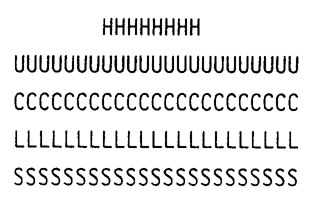
The exemplified core layer (C) thicknesses vary from 2-9 µm. The lower cladding (L) in each case is a layer of an optical polymer having a refractive index of 1.58. For the upper cladding are selected materials with three different refractive indices, viz. 1.56, 1.57, and 1.58, i.e., with ΔRI between the two claddings being 0.02, 0.01, and 0 respectively. The third one is a symmetrical waveguide (not in accordance with the invention). The core layer in each case has a refractive index higher than that of the two claddings, the optimal RI varying between 1.583 and 1.589.

Table 1 shows the cladding thicknesses that can be employed when the waveguide of given core layer thicknesses and refractive indices is to be coupled to an SSMF while retaining the required mode match (if the cladding thicknesses are lower, light will be absorbed by layers outside the cladding, such as the heating element or the substrate, which leads to a considerable propagation loss). The man skilled in the art can determine which layer thicknesses are possible by calculating the overlap between the modal field of the SSMF and that of the waveguide. Thicker claddings could be employed, but this would needlessly reduce the benefit to be had from the invention due to increased heat capacity. The upper limit for the core thickness is mainly determined by the point at which the waveguide becomes multimode for the given wavefront. This is undesirable, as it leads to a less precise functioning of the device, and the higher order modes generated cannot be coupled into an output SSMF. The man skilled in the art can determine the point at which a waveguide becomes undesirably multimode by means of the known waveguide dispersion relation.

**TABLE 1**

| Core Thickness (µm) | Upper cladding thickness (µm) | | |
|---|---|---|---|
| | Asymmetric | | Symmetric |
| | ΔRI 0.02 | ΔRI 0.01 | ΔRI 0 |
| 2 | 3.17 | 4.56 | 17.57 |
| 3 | 2.99 | 4.35 | 15.67 |
| 4 | 2.85 | 4.13 | 14.42 |
| 5 | 2.73 | 4.00 | 12.70 |
| 6 | 2.63 | 3.84 | 11.05 |
| 7 | 2.53 | 3.68 | 9.31 |
| 8 | 2.42 | 3.50 | 7.60 |
| 9 | 2.30 | 3.24 | 5.96 |

From Table 1 it is clear that, in each case, the asymmetric waveguide according to the invention has a lower upper cladding thickness than the symmetric waveguide not according to the invention. The waveguides of the invention thus possess the above-identified advantages associated with a thinner cladding when used in thermo-optic devices.

From Table 1 the overall waveguide thicknesses can be computed (in each case the lower cladding has the same thickness as the upper cladding in the corresponding symmetric waveguide). The results are given in Table 2.

**TABLE 2**

| Core thickness (µm) | Total waveguide thickness (µm) | | |
|---|---|---|---|
| | Asymmetric | | Symmetric |
| | ΔRI 0.02 | ΔRI 0.01 | ΔRI 0 |
| 2 | 22.74 | 24.13 | 37.14 |
| 3 | 21.66 | 23.02 | 34.34 |
| 4 | 21.27 | 22.55 | 32.84 |
| 5 | 20.43 | 21.70 | 30.40 |
| 6 | 19.68 | 20.89 | 28.10 |
| 7 | 18.84 | 19.99 | 25.26 |
| 8 | 18.02 | 19.10 | 23.20 |
| 9 | 17.26 | 18.20 | 20.92 |

From Table 2 it is clear that in each case the asymmetric waveguide according to the invention is thinner than the symmetric waveguide not in accordance with the invention. In the case of a core thickness of 9 µm, the overall thickness of a symmetric waveguide is relatively low, but in the case of this waveguide being optimized for fiber to chip coupling a 9 µm core causes the waveguide being multimode, which is undesirable.

In Table 3 the coupling losses incurred with the various exemplified waveguides are given. The wavelength employed was 1.3 µm.

**TABLE 3**

| Core thickness (µm) | Calculated coupling loss (dB) | | |
|---|---|---|---|
| | Asymmetric | | Symmetric |
| | ΔRI 0.02 | ΔRI 0.01 | ΔRI 0 |
| 2 | 0.691 | 0.526 | 0.144 |
| 3 | 0.461 | 0.355 | 0.107 |
| 4 | 0.301 | 0.231 | 0.075 |
| 5 | 0.191 | 0.144 | 0.048 |
| 6 | 0.116 | 0.086 | 0.028 |
| 7 | 0.068 | 0.044 | 0.015 |
| 8 | 0.039 | 0.028 | 0.009 |
| 9 | 0.026 | 0.020 | 0.012 |

From Table 3 it is clear that, in each case, the asymmetric waveguide according to the invention displays a somewhat higher coupling loss than the symmetric waveguide not in accordance with the invention. However, a difference in loss of lower than about 0.1 dB is considered negligible, and it is clear that with the invention a favourable combination of low upper cladding thickness, low overall waveguide thickness, and low coupling loss is achievable. In the case of the listed exemplified waveguides, those with core thicknesses of 7 and 8 µm are preferred in this respect.

### EXAMPLE 2

For two thermo-optic Y-shaped switches, i.e., switches having one input channel and two output channels (made in the guiding layer of a layered waveguide with an asymmetric structure such as depicted in Figure 1), response times were determined.

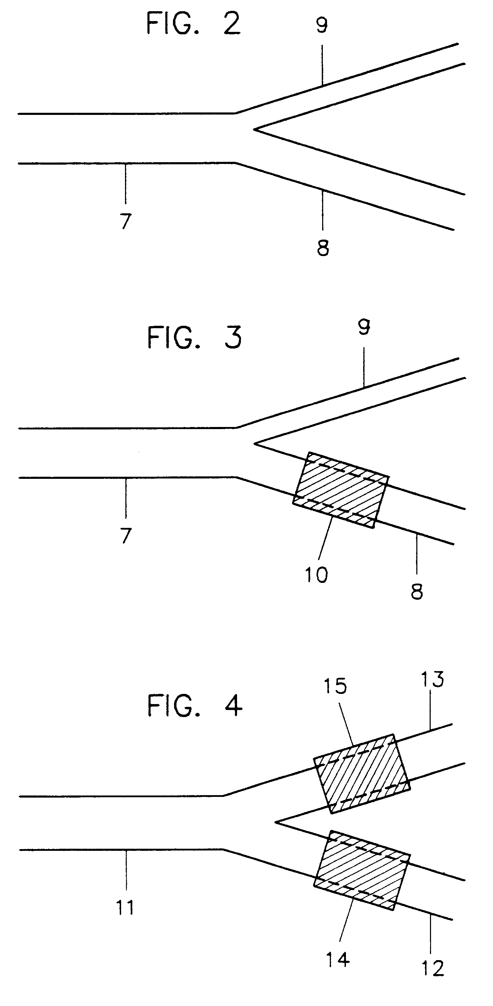

In cross-section, the waveguide can be indicated schematically as in Example 1 and Figure 1. The basic Y-shaped waveguide channel design used is indicated schematically in Figure 2.

Figure 2 shows a top view of the waveguide channels. Light enters the waveguide via channel (7). Due to the asymmetry of the Y's legs (8) and (9) - not to be confused with the asymmetry of the waveguide's layers! - the light propagating through the waveguide will be directed through leg (8). This is defined here as the "off" state.

On the basis of the Y-shaped channel waveguide shown in Figure 2, a thermo-optic switch was designed in accordance with Figure 3.

Figure 3 shows a top view of the waveguide channels. Light enters the waveguide via channel (7). A heating element (10) is placed at leg (8). This enables leg (9) to be activated: when the heating element is turned on, by applying a 15 mW surge, the refractive index decreases locally at the part of leg (8) underneath heating element (10) to such an extent that the propagating light will be directed to leg (9). This is defined here as the "on" state.

The response time for reaching the state defined as "on" was less than 1 ms. The response time for reaching the "off" state, by turning the heating element off and thus allowing the refractive index to retain the original value, was about 4 ms.

### EXAMPLE 3

A second thermo-optic switch was designed, see Figure 4.

Figure 4 shows a top view of the waveguide. Light enters the waveguide via channel (11). The symmetric legs (12) and (13) are provided with heating elements (14) and (15). When one heating element is turned on, say heating element (14), the refractive index of the part of the waveguide's leg (12) underneath it decreases locally to such an extent that the propagating light will be directed to the other leg, in this case leg (13). This being defined as the "on" state, the "off" state now can be reached by employing heating element (15), and turning off heating element (14), so as to have the refractive index of leg (13) decrease and that of leg (12) increase back to the original value, thus having the light directed to leg (12).

The response time for reaching either state was about 1 ms.

## Claims

1. A polymeric thermo-optic device (1) comprising a polymeric optical waveguide and a heating element (6), the polymeric waveguide having a layered structure comprising a polymeric guiding layer (4) sandwiched between two cladding layers (3,5) of a lower refractive index than the guiding layer, characterized in that the cladding layer (5) adjacent to the heating element (6) has a lower refractive index than the other cladding layer (3).

2. A polymeric thermo-optic device according to claim 1, characterized in that the layered polymeric waveguide structure is provided on a substrate (2), the heating element (6) being applied onto the upper cladding layer (5), the other cladding (3) being the lower cladding.

3. A polymeric thermo-optic device according to claim 2, characterized in that the substrate is selected from the group consisting of silicon, metal, and ceramic materials.

4. A polymeric thermo-optic device according to claim 3, characterized in that an additional layer is present between the substrate and the lower cladding, the additional layer having a lower index of refraction than the lower cladding.

5. A polymeric thermo-optic device according to any one of the preceding claims, characterized in that not only the guiding layer but also the cladding layers are polymeric.

6. A polymeric thermo-optic device according to claims 4 and 5, characterized in that the lower cladding is divided into two sublayers: a sublayer having a higher index of refraction adjacent to the guiding layer, and a sublayer having a lower index of refraction adjacent to the substrate.

7. A polymeric thermo-optic device according to claim 6, characterized in that the sublayer having the lower index of refraction has the same index of refraction as the upper cladding layer.

8. A polymeric thermo-optic device according to any one of the preceding claims, characterized in that the refractive index contrast between the cladding layers is of from about 0.005 to about 0.05.

9. A polymeric thermo-optic device according to claim 8, characterized in that the refractive index contrast between the cladding layers is of from about 0.005 to 0.01.

10. A polymeric thermo-optic device according to claim 8, characterized in that the refractive index contrast between the cladding layers is of from about 0.03 to 0.05.

11. A polymeric thermo-optic device according to claim 8, characterized in that the refractive index contrast between the cladding layers is of from about 0.01 to 0.03.

12. A layered polymeric optical waveguide structure (optoboard) comprising a polymeric guiding layer sandwiched between two polymeric cladding layers of a lower refractive index than the guiding layer, characterized in that the cladding layers have different refractive indices.
